# EUROPEAN PATENT SPECIFICATION

(11) **EP 3 594 573 B1**
(45) Date of publication and mention of the grant of the patent: **27.01.2021**
(21) Application number: 18182417.8
(22) Date of filing: 09.07.2018
(51) Int. Cl.: F24C 7/08, F24C 15/02, F24C 15/32

(54) **HOUSEHOLD APPLIANCE WITH A TILT-DOWN CONTROL PANEL**
HAUSHALTSGERÄT MIT ABKLAPPBAREM BEDIENFELD
APPAREIL ÉLECTROMÉNAGER COMPORTANT UN PANNEAU DE COMMANDE INCLINABLE VERS LE BAS

(43) Date of publication of application: 15.01.2020
(73) Proprietor: Teka Portugal, S.A., 3834-909 Ílhavo (PT)
(72) Inventor: Magano, Fernando, 3834-909 Ílhavo (PT); Ribau Esteves, Sergio, 3834-909 Ílhavo (PT); Viegas, Antonio, 3834-909 Ílhavo (PT)
(74) Representative: Clarke Modet & Co.

(56) References cited:
- CN-A- 108 243 586
- DE-A1-102012 224 033
- JP-A- S6 131 822
- US-A1- 2012 111 366
- US-A1- 2016 320 067

## Description

### Field of the invention

The present invention refers to a household appliance with a control panel that comprises a hinge mechanism specifically designed for offering the possibility of tilting down the control panel without causing a mechanical conflict with the door of the household appliance, such that the control panel is able to rotate in the same space occupied by itself. The household appliance of the invention is useful in the household industry.

### Technical problem to be solved and background to the invention

Steam ovens have been developed in recent years due to the possibilities it offers for a healthy cooking, which is currently one of the goals to be reached when cooking.

This kind of oven requires of a water tank, which has to be accessible for the filing of the same, and at the same time, it has to be close to the heating chamber of the oven.

The water tank can be placed in different positions according to the design of the oven, in some cases, it is located besides the heating chamber and the door of the oven has to be open for the filing of the water tank, in other cases it is located over the heating chamber behind the control panel of the oven. In these cases the control panel needs to be moved for accessing the water tank.

The control panel of a household appliance makes that the full control panel tilts down due to a special hinge system, granting access to the water tank by means of a tilt down movement of the control panel.

The main advantages of the tilt-down movement of the control panel of a household appliance of the invention are:
- the aesthetics is not disrupted;
- the hinge mechanism of the control panel is simple, robust and reliable;
- the hinge mechanism of the control panel makes possible that the oven continues cooking for some time while the control panel is open, allowing the water refilling without interrupting the cooking cycle.

Applicant is aware of document US 2016/320067A1 which describes a domestic appliance comprising a moveable control panel with the technical features of the preamble of claim 1.

Another document known is document CN108243586A which discloses a control panel up-and-down mechanism of a household appliance that is similar to the household appliance with a control panel disclosed in claim 1.

Document DE102012224033A1 discloses a cooking device that includes a lighting system that is installed in the rear part of a control panel which is pivotally joined to the cooking device, such that the control panel can rotate and allow access to a working area that is in turn illuminated by the lighting system.

Document JPS6131822A discloses an electric cooker with an operation panel having a part and a display part so it can be stored in a main body which is similar to the household appliance with a control panel of the invention.

Document US2012/111366A1 discloses an appliance with a door and a latch assembly located in the door, such that the latch assembly comprises a handle and a user interface mounted to the handle with enhanced viewability when the handle is in the unlatched position.

### Description of the invention

Household appliance with a tilt-down control panel comprising a housing for the control panel, an electronic control configured to receive instructions from the control panel, an oblong cam located besides the housing, a pin between the oblong cam and the control panel, a hinge system configured to provide a non-circular movement to the control panel, wherein the hinge system is configured to provide the control panel with movement such that it remains in the same space occupied by itself.

The oblong cam is configured to receive instructions from the electronic control and is configured to rotate and push the pin which is in turn configured to push the control panel, such that the control panel rotates around the hinge system.

The household appliance with a control panel of the invention further comprises a latching system configured to maintain the control panel within the housing.

The hinge system of the household appliance with a control panel comprises:
- a pivot piece located in the lowest part of the housing of the household appliance,
- a V-shaped piece with a first end with a pivot joint between this first end and the upper part of the pivot piece and a second end with a pivot joint between this second end and the control panel, and
- a connecting rod with a first end with a pivot joint between this first end and the lower part of the pivot piece, a second end with another pivot joint between this second end and the housing of the hinge system,
- a housing fixed to the control panel.

The housing of the hinge system is configured to accommodate the L-shaped piece, the V-shaped piece and the connecting rod when the control panel is located within the housing of the household appliance.

The control panel of the household appliance of the invention is configured to rotate around the connecting rod and the V-shaped piece together.

The V-shaped piece further comprises a housing in the vertex between the first end and the second end.

The household appliance with a control panel of the invention can comprise a wire-way configured to allow the passage of wires.

The latching system of the household appliance with a control panel of the invention comprises a magnet and a metal part that are attracted together.

### Brief description of the figures

To complete the description, and for the purpose of helping to make the characteristics of the invention more readily understandable, the present specification is accompanied by a set of figures constituting an integral part of the same, which by way of illustration and not limitation represents the following:

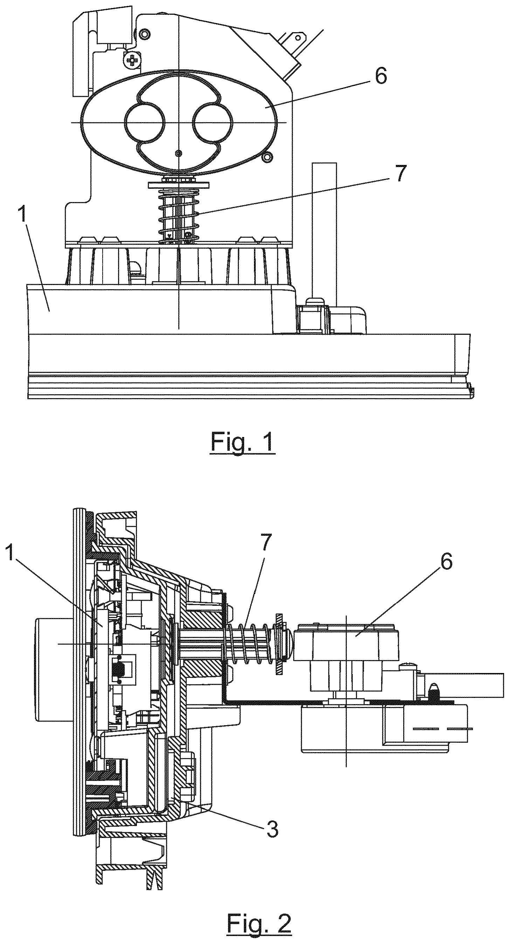

Figure 1 shows an upper view of part of the hinge system of the household appliance of the invention showing the oblong cam in the position where the control panel is closed.
Figure 2 shows a side view of the of the hinge system of the household appliance of the of the invention showing the position of the oblong cam of the figure 1.

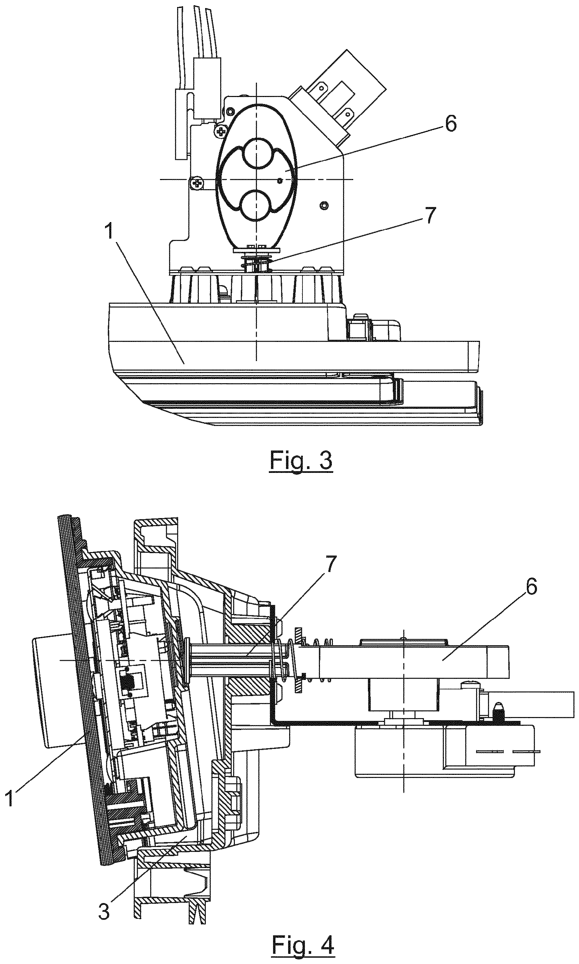

Figure 3 shows the same view of the figure 1 but with the oblong cam in the position where it pushes the pin that pushes the control panel.
Figure 4 shows a side view of the of the hinge system of the invention showing the position of the oblong cam of the figure 3.

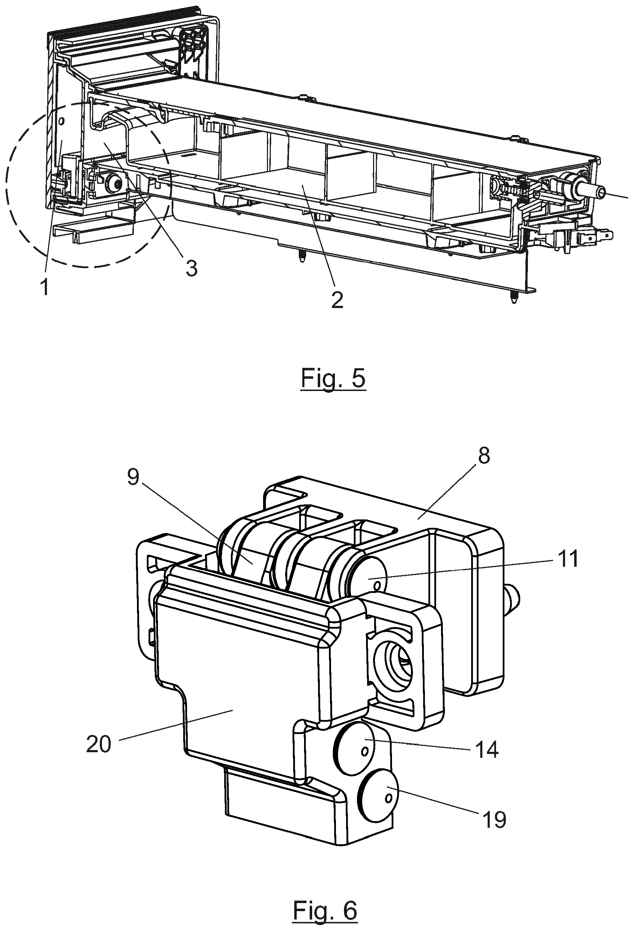

Figure 5 shows a section and perspective view of an oven showing the position of part of the hinge system of the household appliance of the invention where the control panel is closed.
Figure 6 shows a perspective of the hinge system in the position where the control panel would be located within the housing of the household appliance.

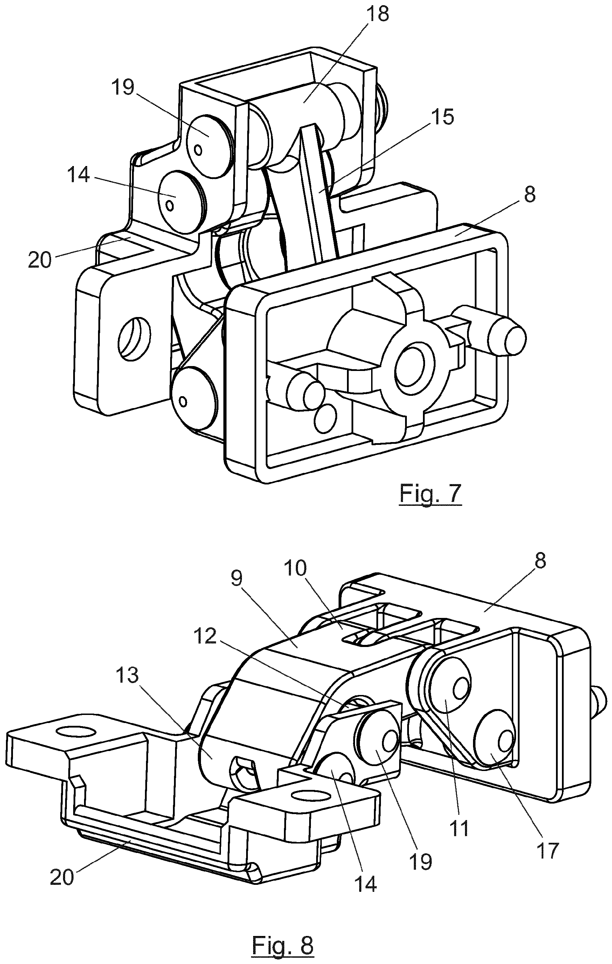

Figure 7 shows the perspective of figure 6 with another point of view.
Figure 8 shows the perspective of the hinge system in the position where the control panel would be located in horizontal position.

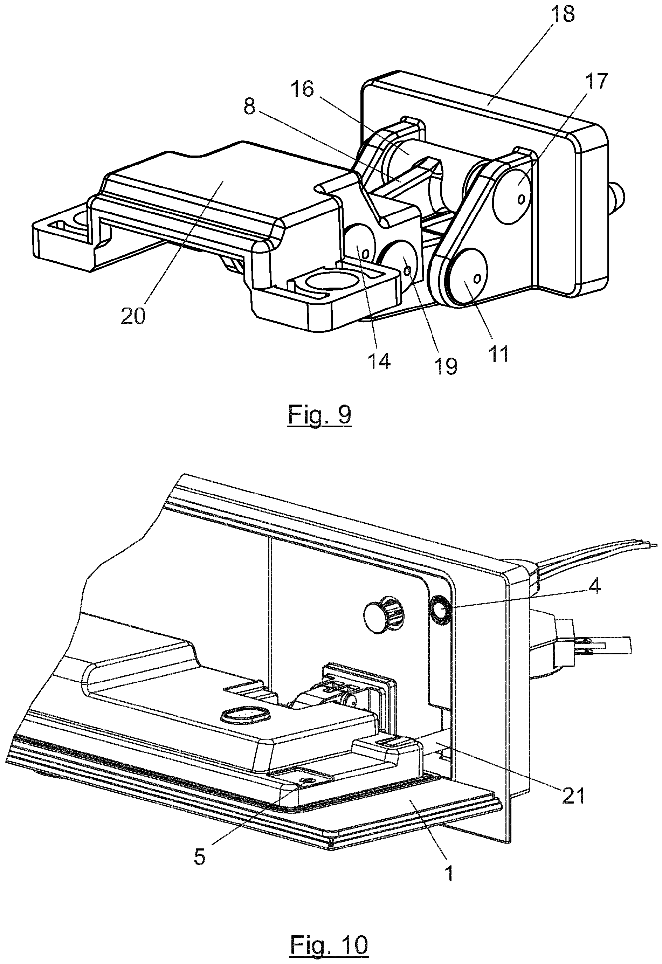

Figure 9 shows the perspective of figure 8 with another point of view.
Figure 10 shows a perspective view of the control panel of the household of the invention showing the magnet and the metal part of the latching system.

A list of numbered references that have been used in the figures shown is provided below:
1. control panel,
2. water tank,
3. housing of the household appliance,
4. magnet,
5. metal part,
6. oblong cam,
7. pin,
8. pivot piece,
9. V-shaped piece,
10. first end of the V-shaped piece,
11. pivot joint between the first end of the V-shaped piece and the pivot piece,
12. housing in the vertex of the V-shaped piece,
13. second end of the V-shaped piece,
14. pivot joint between the second end of the V-shaped piece and the housing of the hinge system,
15. connecting rod,
16. first end of the connecting rod,
17. pivot joint between the first end of the connecting rod and the pivot piece,
18. second end of the connecting rod,
19. pivot joint between the second end of the connecting rod and the housing of the hinge system,
20. housing of the hinge system, and
21. wire-way.

### Detailed Description of the invention

The invention is a household appliance with a control panel (1), that has to be moved to allow the access to a water tank (2) of the household appliance. The movement of the control panel (1) is provided by a series of components that allows a non-circular movement of the control panel (1), which remains in the same space occupied by itself. With this non-circular movement the control panel (1) does not cause a mechanical conflict with the door of the household appliance, thus the household appliance can continue cooking while the control panel (1) rotates.

In the preferred embodiment of the invention, the household appliance is a steam oven, such that the steam oven requires of the water tank for cooking.

The water tank (2), in the household appliance with the control panel (1) of the invention, is located above a heating chamber of the household appliance.

The control panel (1) of the household appliance of the invention can be located in two end positions:
- a first position where the control panel (1) is vertical and it is located in a housing (3) of the household appliance above the edge of the door of said household appliance, and
- a second position where the control panel (1) is in horizontal position, the control panel (1) in the second position is located ahead of the first position.

The first position is a position where the control panel (1) blocks the access to the water tank (2), while the second position is a position where the control panel (1) leaves free space to access the water tank (2).

The second position of the control panel (1) is provided by a hinge system. The hinge system provides a non-circular movement to the control panel (1) such that the control panel makes this movement in the same space occupied by itself. The position of the control panel (1) provided by this non-circular movement allows the filing of the water tank (2) and allows the household appliance to continue cooking while the water tank (2) is being filled.

The household appliance of the invention comprises a latching system configured to maintain the control panel (1) in the housing (3) of the household appliance. In the preferred embodiment of the household appliance, the latching system comprises a magnet (4) and a metal part (5) that are attracted together.

The household appliance of the invention comprises:
- an electronic control configured to receive instructions from the control panel (1) and send these instructions to other elements,
- an oblong cam (6) located besides the housing (3) of the household appliance,
- a pin (7) between the oblong cam (6) and the control panel (1),
- a hinge system configured to allow the non-circular movement of the control panel (1).

The hinge system of the household appliance of the invention comprises:
- a housing (20) fixed to the control panel (1),
- a pivot piece (8), located in the lowest part of the housing (3) of the household appliance,
- a V-shaped piece (9) comprising:
   - a first end (10) with a pivot joint (11) between this first end (10) and the pivot piece (8),
   - a vertex between the first end (10) and the second end (13) with a housing (12) in the vertex,
   - a second end (13) with a pivot joint (14) between this second end (13) and the housing (20) of the hinge system,
- a connecting rod (15) comprising:
   - a first end (16) with a pivot joint (17) between this first end (16) and the pivot piece (8),
   - a second end (18) with another pivot joint (19) between this second end (18) and the housing (20) fixed to the control panel (1),(19)(18)(15);

The housing (20) is configured to accommodate the pivot piece (8), the V-shaped piece (9) and the connecting rod (15) when the control panel (1) is located within the housing (3) of the household appliance.

The control panel (1) rotates via the housing (20) which is attached to the control panel (1), such that the control panel (1) rotates around the pivot joint (19) of the second end (18) of the connecting rod (15) and around the pivot joint (14) of the second end (13) of the V-shaped piece (9).

The control panel (1) of the household appliance of the invention can be located in a position between the two end positions. The intermediate position is a position where the control panel (1) is partially open, the control panel (1) reaches this position after the oblong cam (6) has rotated and the pin (7) has pushed the control panel (1), such that the control panel (1) has been released of the latching system.

The non-circular movement of the control panel is carried out in two phases:
- a first phase where the control panel (1) is released of the latching system, and,
- a second phase, where the control panel (1) makes a non-circular movement around the hinge system attached to the lower part of the control panel (1).

The first phase of the non-circular movement of the control panel (1) is carried out in the following way:
- the oblong cam (6) rotates thanks to the motor which is in turn activated by the electronic control of the control panel (1),
- the oblong cam (6) in its rotation pushes the pin (7),
- the pin (7) in turn pushes the control panel (1) by the upper part of said control panel (1).

The second phase of the non-circular movement of the control panel (1) is carried out in the following way:
- the control panel (1) is manually rotated;
- the connecting rod (15) rotates around the pivot joint (17) between the connecting rod (15) and the pivot piece (8);
- at the same time the V-shaped piece (9) rotates around the pivot joint (11) between the V-shaped piece (9) and the pivot piece (8),
- at the same time the housing (20) of the hinge system rotates around the pivot joint (19) between the housing (20) and the connecting rod (8), and also around the pivot joint (14) between the housing (20) and the V-shaped piece (9).

The non-circular movement of the control panel (1) ends when the second end (18) of the connecting rod (8) finds the housing (12) of the vertex of the V-shaped piece (9).

The control panel (1) can go back to the closed position in a fully manual operation, in which a user needs to restore the control panel (1) to its original position within the housing (3) of the household appliance.

The control panel (1) of the household appliance of the invention also comprises a wire-way (21) configured to allow the passage of wires that connect a user interface board with a main power board of the household appliance.

## Claims

1. Household appliance with a control panel, where the household appliance comprises:
- - a housing (3) for the control panel (1)
- - an electronic control configured to receive instructions from the control panel (1) - a hinge system configured to provide a non-circular movement to the control panel (1), the hinge system comprises:
- a pivot piece (8), attached to the lower part of the housing (3) of the household appliance,
- a V-shaped piece (9) comprising:
- a first end (10) with a pivot joint (11) between this first end (10) and the pivot piece (8),
- a vertex between the first end (10) and the second end (13) with a housing (12) in the vertex,
- a second end (13) with a pivot joint (14) between this second end (13) and the housing (20) of the hinge system,
- a connecting rod (15) comprising:
- a first end (16) with a pivot joint (17) between this first end (16) and the pivot piece (8),
- a second end (18) with another pivot joint (19) between this second end (18) and the housing (20) of the hinge system,
where the control panel (1) is configured to rotate via the housing (20), rotating around the pivot joint (19) between the housing (20) and the connecting rod (15) and also around the pivot joint (14) between the housing (20) and the V-shaped piece (9),
where the connecting rod (8) is configured to rotate around the pivot joint (17) between this first end (16) and the pivot piece (8), and
where the V-shaped piece (9) is configured to rotate around the pivot joint (11) between the V-shaped piece (9) and the pivot piece (8), **characterized in that** the control panel is a tilt-down control panel (1) and the hinge system is configured to provide the control panel (1) with movement such that it remains in the same space occupied by itself, further **characterized by** - an oblong cam (6) located besides the housing (20), - a pin (7) between the oblong cam and the control panel (1), where the oblong cam (6) is configured to receive instructions from the electronic control and is configured to rotate and push the pin which is in turn configured to push the control panel (1), such that the control panel (1) rotates around the hinge system, and a housing (20) fixed to the control panel (1).

2. Household appliance with a control panel (1) according to claim 1 further comprising a latching system configured to maintain the control panel (1) within the housing (3).

3. Household appliance with a control panel according to any claims 1 to 2 **characterized in that** it further comprises a wire-way (21) configured to allow the passage of wires.

4. Household appliance with a control panel according to any claims 2 to 3 **characterized in that** the latching system comprises a magnet (4) and a metal part (5) that are attracted together.

## Patentansprüche

1. Haushaltsgerät mit einem Bedienfeld, wobei das Haushaltsgerät umfasst:
- ein Gehäuse (3) für das Bedienfeld (1)
- eine elektronische Steuerung, die zum Empfangen von Steuerbefehlen von dem Bedienfeld (1) ausgelegt ist
- ein Scharniersystem, das dazu ausgelegt ist, dem Bedienfeld (1) eine nicht kreisförmige Bewegung zu ermöglichen,
wobei das Scharniersystem Folgendes umfasst:
- ein unten am Gehäuse (3) des Haushaltsgeräts angebrachtes Schwenkteil (8),
- ein V-förmiges Teil (9), umfassend:
- ein erstes Ende (10) mit einem Drehgelenk (11) zwischen diesem ersten Ende (10) und dem Schwenkteil (8),
- einen Scheitel zwischen dem ersten Ende (10) und dem zweiten Ende (13) mit einem Gehäuse (12) im Scheitel,
- ein zweites Ende (13) mit einem Drehgelenk (14) zwischen diesem zweiten Ende (13) und dem Gehäuse (20) des Scharniersystems,
- eine Verbindungsstange (15), umfassend:
- ein erstes Ende (16) mit einem Drehgelenk (17) zwischen diesem ersten Ende (16) und dem Schwenkteil (8),
- ein zweites Ende (18) mit einem weiteren Drehgelenk (19) zwischen diesem zweiten Ende (18) und dem Gehäuse (20) des Scharniersystems,
wobei das Bedienfeld (1) über das Gehäuse (20) drehbar ausgelegt ist und sich um das Drehgelenk (19) zwischen dem Gehäuse (20) und der Verbindungsstange (15) und auch um das Drehgelenk (14) zwischen dem Gehäuse (20) und dem V-förmigen Teil (9) dreht,
wobei die Verbindungsstange (8) so ausgelegt ist, dass sie sich um das Drehgelenk (17) zwischen diesem ersten Ende (16) und dem Schwenkteil (8) dreht, und
wobei das V-förmige Teil (9) so ausgelegt ist, dass es sich um das Drehgelenk (11) zwischen dem V-förmigen Teil (9) und dem Schwenkteil (8) dreht, **dadurch gekennzeichnet, dass** das Bedienfeld ein abklappbares Bedienfeld (1) ist und das Scharniersystem dazu ausgelegt ist, dem Bedienfeld (1) eine entsprechende Bewegung zu ermöglichen, sodass es innerhalb des von ihm selbst eingenommenen Raums verbleibt, ferner **gekennzeichnet durch** - einen neben dem Gehäuse (20) angeordneten länglichen Nocken (6), - einen Stift (7) zwischen dem länglichen Nocken und dem Bedienfeld (1), wobei der längliche Nocken (6) so ausgelegt ist, dass er Befehle von der elektronischen Steuerung empfängt und so ausgelegt ist, dass er sich dreht und den Stift anschiebt, welcher seinerseits so ausgelegt ist, dass er das Bedienfeld (1) anschiebt, sodass sich das Bedienfeld (1) um das Scharniersystem dreht, und ein an dem Bedienfeld (1) befestigtes Gehäuse (20).

2. Haushaltsgerät mit einem Bedienfeld (1) nach Anspruch 1, ferner umfassend ein Verriegelungssystem, das dazu ausgelegt ist, das Bedienfeld (1) innen im Gehäuse (3) zu halten.

3. Haushaltsgerät mit einem Bedienfeld nach einem der Ansprüche 1 bis 2 **dadurch gekennzeichnet, dass** es ferner einen Kabelkanal (21) umfasst, der zum Durchführen von Kabeln ausgestaltet ist.

4. Haushaltsgerät mit einem Bedienfeld nach einem der Ansprüche 2 bis 3 **dadurch gekennzeichnet, dass** das Verriegelungssystem einen Magneten (4) und ein Metallstück (5) mit gegenseitiger Anziehung umfasst.

## Revendications

1. Appareil ménager avec un panneau de commande, dont l'appareil ménager est composé :
- un boîtier (3) pour le panneau de commande (1)
- une commande électronique configurée pour recevoir des instructions du panneau de contrôle (1)
- un système de charnière configuré pour fournir un mouvement non circulaire au panneau de contrôle (1),
le système de charnière comprend :
- une pièce pivotante (8), fixée à la partie inférieure du boîtier (3) de l'appareil ménager,
- une pièce en forme de V (9) comprenant :
- une première extrémité (10) avec une articulation de pivot (11) entre cette première extrémité (10) et la pièce pivot (8),
- un sommet entre la première extrémité (10) et la deuxième extrémité (13) avec un logement (12) dans le sommet,
- une deuxième extrémité (13) avec une articulation de pivot (14) entre cette deuxième extrémité (13) et le boîtier (20) du système de charnière,
- une bielle (15) comprenant :
- une première extrémité (16) avec une articulation de pivot (17) entre cette première extrémité (16) et la pièce pivot (8),
- une deuxième extrémité (18) avec une articulation de pivot (19) entre cette deuxième extrémité (18) et le boîtier (20) du système de charnière,
où le panneau de commande (1) est configuré pour tourner via le boîtier (20), en tournant autour de l'articulation de pivot (19) entre le boîtier (20) et la bielle (15) et également autour de l'articulation de pivot (14) entre le boîtier (20) et la pièce en forme de V (9),
où la bielle (8) est configurée pour tourner autour de l'articulation de pivot (17) entre cette première extrémité (16) et la pièce de pivot (8), et
où la pièce en forme de V (9) est configurée pour tourner autour de l'articulation de pivot (11) entre la pièce en forme de V (9) et la pièce de pivot (8), **caractérisé en ce que** le panneau de commande est un panneau de commande basculant vers le bas (1) et le système de charnière est configuré pour fournir au panneau de commande (1) un mouvement tel qu'il reste dans le même espace occupé par lui-même, **caractérisé en outre par** - une came oblongue (6) située à côté du logement (20), - une broche (7) entre la came oblongue et le panneau de commande (1), où la came oblongue (6) est configurée pour recevoir des instructions de la commande électronique et est configurée pour tourner et pousser la broche qui est à son tour configurée pour pousser le panneau de commande (1), de sorte que le panneau de commande (1) tourne autour du système de charnière, et un boîtier (20) fixé au panneau de commande (1).

2. Appareil ménager avec un panneau de commande (1) selon la revendication 1, comprenant en outre un système de verrouillage configuré pour maintenir le panneau de commande (1) à l'intérieur du boîtier (3).

3. Appareil ménager avec un panneau de commande selon l'une des revendications 1 à 2, **caractérisé en ce qu'il** comprend en outre un chemin de câbles (21) configuré pour permettre le passage de câbles.

4. Appareil ménager avec un panneau de commande selon l'une des revendications 2 à 3, **caractérisé en ce que** le système de verrouillage comprend un aimant (4) et une pièce métallique (5) qui sont attirés l'un vers l'autre.
